# EUROPÄISCHE PATENTSCHRIFT

(11) **EP 3 265 711 B1**
(45) Veröffentlichungstag und Bekanntmachung des Hinweises auf die Patenterteilung: **03.04.2019**
(21) Anmeldenummer: 16704844.6
(22) Anmeldetag: 17.02.2016
(51) Int. Cl.: F16L 13/14, B21D 39/04

(54) **PRESSHÜLSE, PRESSFITTING UND VERWENDUNG DES PRESSFITTINGS ODER DER PRESSHÜLSE**
PRESS SLEEVE, PRESS FITTING AND USE OF THE PRESS FITTING OR THE PRESS SLEEVE
MANCHON À SERTIR POUR RACCORD À SERTIR ET UTILISATION DU RACCORD À SERTIR OU DU MANCHON À SERTIR

(30) Priorität: 05.03.2015 DE 102015103228
(43) Veröffentlichungstag der Anmeldung: 10.01.2018
(73) Patentinhaber: Viega Technology GmbH & Co. KG, 57439 Attendorn (DE)
(72) Erfinder: HOFMANN, Frank, 57439 Attendorn (DE)
(74) Vertreter: Cohausz & Florack
(86) Internationale Anmeldenummer: PCT/EP2016/053362
(87) Internationale Veröffentlichungsnummer: WO 2016/139062

(56) Entgegenhaltungen:
- WO-A1-93/09374
- WO-A1-2014/000897
- DE-A1-102008 039 446

## Beschreibung

Die Erfindung betrifft eine Presshülse für einen Pressfitting zum Herstellen einer dichtenden unlösbaren Rohrverbindung, mit einem Aufnahmeabschnitt zum Aufnehmen eines Fittinggrundkörpers und mit einem Pressabschnitt, wobei der Innendurchmesser des Aufnahmeabschnitts an den Außendurchmesser des Fittinggrundkörpers angepasst ist und wobei der Innendurchmesser des Pressabschnitts zumindest abschnittsweise kleiner als der Außendurchmesser des Fittinggrundkörpers ausgebildet ist. Weiter betrifft die Erfindung einen Pressfitting mit einer erfindungsgemäßen Presshülse und die Verwendung einer erfindungsgemäßen Presshülse oder eines erfindungsgemäßen Pressfittings.

Presshülsen der eingangs genannten Art werden üblicherweise in Rohrleitungssystemen eingesetzt, um im Zusammenwirken mit einem Fittinggrundkörper Rohre metallisch dichtend und unlösbar miteinander zu verbinden. Eine gattungsgemäße Presshülse ist beispielsweise aus der WO 2014/000897 A1 bekannt.

Gemäß der WO 2014/000897 A1 wird zum Herstellen einer metallisch dichtenden unlösbaren Rohrverbindung zunächst ein Rohrende des zu verbindenden Rohrs in eine Öffnung des Fittinggrundkörpers eingeführt, so dass der Fittinggrundkörper das Rohrende umfangsseitig umschließt. Die Presshülse wird mit Hilfe eines Presswerkzeugs auf den Fittinggrundkörper in axialer Richtung aufgeschoben, wobei die "axiale Richtung" entlang der Längsachse des Rohrendes und damit quer zum Rohrquerschnitt orientiert ist. Der Durchmesser der inneren Mantelfläche der Presshülse ist über der in axialer Richtung gemessenen Länge der Presshülse verjüngt ausgeführt, so dass beim axialen Aufschieben der Presshülse der Rand bzw. der Randbereich des Fittinggrundkörpers umgebördelt und in das zu verbindende Rohrende eingedrückt wird. Mit anderen Worten wird der Rand bzw. Randbereich des Fittinggrundkörpers in seinem Durchmesser radial verengt. Durch die an der Presshülse vorgesehene, vorzugsweise konisch zulaufende Mantelfläche wird daher ein axiales Aufschieben der Presshülse in eine radiale Verformung des Fittinggrundkörpers umgesetzt. Die "radiale Richtung" ist dabei quer zur Längserstreckung des anzubindenden Rohrendes und damit quer zu axialen Richtung orientiert. Auf diese Weise werden der Fittinggrundkörper und das Rohrende durch das axiale Aufschieben der Presshülse plastisch verformt und miteinander verpresst.

Bei den aus der WO 2014/000897 A1 bekannten Fittings kann es vereinzelt dazu kommen, dass die vormontierte Presshülse vor dem Verpressen wieder von dem Fittinggrundkörper rutscht. Des Weiteren können sich unter Umständen an der verpressten Verbindung Undichtigkeiten bei Biege- oder Zugbelastungen ergeben.

Die WO 93/09374 A1 beschreibt ein Fitting mit einem zweiteiligen Aufbau einer Presshülse. Die Presshülse umfasst einen Presseinsatz mit einer verjüngenden Innenfläche und einen im Wesentlichen zylindrischen Pressring insbesondere aus einem leichtgewichtigen Verbundmaterial.

Der vorliegenden Erfindung liegt vor diesem Hintergrund das technische Problem zugrunde, eine Presshülse, einen Pressfitting mit einer solchen Presshülse und die Verwendung einer solchen Presshülse oder eines solchen Pressfittings anzugeben, welche die zuvor genannten Nachteile nicht oder zumindest in geringerem Maße aufweisen, und insbesondere in einfacher und kostengünstiger Weise die Herstellung einer robusten dichtenden Rohrverbindung ermöglichen.

Das technische Problem wird durch eine Presshülse nach Anspruch 1, einen Pressfitting mit einer solchen Presshülse nach Anspruch 13 und die Verwendung der Presshülse oder des Pressfittings nach Anspruch 14 gelöst.

Die Presshülse zeichnet sich dadurch aus, dass im Aufnahmeabschnitt mindestens eine in radialer Richtung federnd elastisch nach innen verspannbare Haltelasche vorgesehen ist und dass die Haltelasche einen freien Endabschnitt aufweist, der im entspannten Zustand der Haltelasche in radialer Richtung mindestens teilweise in den Innenbereich des Aufnahmeabschnitts hineinragt.

Mit Hilfe der Haltelasche wird die Presshülse im fertig montierten Zustand entgegen einem axialen Verschieben gesichert. Dabei wird die Presshülse durch die Haltelasche in radialer Richtung mit dem Fittinggrundkörper verklemmt, wobei durch die radialen Klemmkräfte die einem axialen Lösen der Presshülse entgegenwirkende Reibung zwischen Presshülse und Fittinggrundkörper verstärkt wird. Ergänzend oder alternativ besteht im fertig montierten Zustand eine dem axialen Lösen entgegenwirkende formschlüssige Verbindung zwischen der Presshülse und dem Fittinggrundkörper. Eine solche formschlüssige Verbindung kann dadurch gebildet sein, dass die Haltelasche in radial nach innen gewandter Richtung in das Material des Fittinggrundkörpers eindringt bzw. den Fittinggrundkörper elastisch und/oder plastisch verformt. Alternativ oder ergänzend kann eine solche formschlüssige Verbindung dadurch gebildet sein, dass die Haltelasche in eine umfangsseitig an dem Fittinggrundkörper gebildete Vertiefung, wie einer Nut, ein Rillenprofil oder dergleichen, einrastet, insbesondere nach Art einer Schnappverbindung. Die formschlüssige Verbindung zwischen Haltelasche und Fittinggrundkörper kann im Bereich des freien Endabschnitts der Haltelasche gebildet sein.

Die axiale Sicherung der Presshülse auf dem Fittinggrundkörper durch die mindestens eine Haltelasche kann bereits in einem vormontierten Zustand der Presshülse wirken, wobei der Fittinggrundkörper in dem vormontierten Zustand im Aufnahmeabschnitt der Presshülse aufgenommen ist, während der Rand bzw. Randbereich des Fittinggrundkörpers in dem vormontierten Zustand noch nicht umgebördelt ist. Mit anderen Worten kann der Aufnahmeabschnitt den zu verpressenden Rand bzw. Randbereich des Fittinggrundkörpers im vormontierten Zustand umfangsseitig aufnehmen, während der Pressabschnitt in axialer Richtung benachbart zu dem Rand bzw. Randbereich des Fittinggrundkörpers angeordnet ist.

Der Innenbereich des Aufnahmeabschnitts kann eine, beispielsweise im Wesentlichen zylindrische, Öffnung sein, die an den Außendurchmesser des Fittinggrundkörpers angepasst ist. "Angepasst" bedeutet in diesem Zusammenhang, dass zwischen dem Aufnahmeanschnitt und dem Fittinggrundkörper eine geeignete Press-, Übergangs- oder Spielpassung gebildet sein kann, die eine für den jeweiligen Anwendungsfall zuverlässige (Vor-)Montage von Presshülse und Fittinggrundkörper ermöglicht. Der Fittinggrundkörper kann eine im Wesentlichen zylinderförmige Hülse sein.

In bevorzugter Weise kann die Presshülse durch Umformen, insbesondere Tiefziehen, hergestellt sein. Somit kann zur Herstellung der Presshülse auf das kostengünstige und materialsparende Umformen, insbesondere Blechumformen, zurückgegriffen werden, da die Haltelasche der eingangs beschriebenen Neigung durch Umformen hergestellter Presshülsen entgegenwirkt, nach dem Fügen von dem Fittinggrundkörper abzurutschen. Die Presshülse kann dabei einstückig durch Tiefziehen aus einem Blech hergestellt sein.

Zur Verstärkung bzw. Aussteifung des Pressabschnitts kann der dem Aufnahmeabschnitt abgewandte Rand bzw. Randbereich des Pressabschnitts nach außen umgebörderlt sein. Der umgebördelte Rand bzw. Randbereich des Pressabschnitts kann beispielsweise einen im Wesentlichen ringförmigen, kreisrund umlaufenden Kragen beschreiben.

Die Haltelasche kann durch eine zwischen einer inneren und einer äußeren Mantelfläche der Presshülse vorgesehene radiale Öffnung freigestellt sein. Die Öffnung kann beispielsweise durch Stanzen und/oder spanende Bearbeitung hergestellt sein. Nach dem Freistellen der Haltelasche bzw. dem Herstellen der Öffnung kann die Haltelasche radial nach innen gebogen werden, so dass der freie Endabschnitt der Haltelasche mindestens teilweise in den Innnenbereich des Aufnahmeabschnitts eingreift. Die Material- bzw. Wandstärke der Haltelasche entspricht bevorzugt der Material- oder Wandstärke der Presshülse, wobei Presshülse und Haltelasche insbesondere einstückig gebildet sind. Die Haltelasche kann zusammen mit der Presshülse bzw. als integraler Bestandteil der Presshülse kostengünstig aus einem Blech gefertigt sein.

Nach einer Ausgestaltung weist die Presshülse im Bereich des Aufnahmeabschnitts eine zum Einführen des Fittinggrundkörpers vorgesehene Stirnseite auf. Die Haltelasche ist gemäß dieser Ausgestaltung in von der Stirnseite abgewandter Richtung geneigt. Mit anderen Worten ist die Haltelasche insbesondere nach Art einer Montagefase entgegen der zum Einführen des Fittinggrundkörpers vorgesehenen Stirnseite geneigt. Das Einführen des Fittinggrundkörpers wird durch die Orientierung der Haltelasche erleichtert. Insbesondere kann die Haltelasche stirnseitig im Bereich des Aufnahmeabschnitts vorgesehen sein. Die stirnseitige Haltelasche kann durch Ausstanzen und/oder spanende Bearbeitung eines Blechs oder einer Hülse mit daran anschließendem Tiefziehen und/oder Umbördeln des stirnseitigen Randbereichs des Aufnahmeabschnitts der Presshülse hergestellt sein.

Insbesondere kann eine der Stirnseite zugewandte Führungsfläche der Haltelasche zu einer zentralen Achse der Presshülse unter einem Winkel geneigt angeordnet sein, wobei der Winkel größer als 0° und kleiner als 90° ist. Mit anderen Worten kann die Führungsfläche relativ zu einer zentralen Achse der Presshülse unter einem spitzen Winkel angestellt sein. Die Führungsfläche kann beim Einführen des Fittinggrundkörpers dazu dienen, die axiale Relativbewegung zwischen Presshülse und Fittinggrundkörper in ein Verspannen der Haltelasche gegen den Fittinggrundkörper umzusetzen. Dabei gleitet die Führungsfläche bevorzugt entlang einer Stirnseite des Fittinggrundkörpers bzw. entlang dem die äußere Mantelfläche des Fittinggrundkörpers stirnseitig begrenzenden Rand des Fittinggrundkörpers ab, wird dadurch von dem Fittinggrundkörper umfangsseitig in radialer Richtung nach außen verdrängt und auf diese Weise federnd elastisch nach innen gegen den Fittinggrundkörper verspannt. Dieser Effekt kann sowohl beim Vormontieren der Presshülse auf dem Fittinggrundkörper sowie alternativ oder ergänzend beim Verpressen von Presshülse, Fittinggrundkörper und einem zu verbindenden Rohr erzielt werden.

Im Bereich des freien Endabschnitts der mindestens einen Haltelasche kann eine zur Anlage an dem Fittinggrundkörper vorgesehene Presskante ausgebildet sein, wobei die Presskante insbesondere scharfkantig ist. Unter dem Begriff "scharfkantig" wird vorliegen eine Presskante verstanden, die einen Winkel von kleiner oder gleich 90° bildet. Je geringer der Winkel ist, desto scharfkantiger ist die Presskante. Mit Hilfe der Presskante kann der entgegen einem axialen Verschieben der Presshülse im fertig montierten Zustand wirkende Klemmeffekt der Haltelasche verstärkt werden. Die Presskante ist bevorzugt dazu gebildet, in das Material des Fittinggrundkörpers umfangsseitig einzudringen. Durch die Presskante kann ein formschlüssiges Verkrallen der Haltelasche in dem Material des Fittinggrundkörpers erreicht werden. Der mit der Presskante ausgestattete freie Endabschnitt der Haltelasche kann einem axialen Verschieben zwischen Presshülse und Fittinggrundkörper in einem vormontierten und/oder einem fertig montierten Zustand der Presshülse formschlüssig entgegenwirken.

Insbesondere für den Fall, dass die Haltelasche in von der zum Einführen der Presshülse vorgesehenen Stirnseite der Presshülse abgewandter Richtung erstreckt ist, kann die mit einer Presskante versehene Haltelasche ein axiales Abrutschen der Presshülse von dem Fittinggrundkörper nach Art eines Widerhakens oder einer Kralle verhindern. Einerseits kann ein axiales Aufschieben der Presshülse auf den Fittinggrundkörper in Montage- bzw. Pressrichtung ermöglicht sein, während andererseits ein anschließendes Abziehen der Presshülse entgegen der Montagerichtung durch die Haltelasche gesperrt bzw. blockiert wird, so dass das Abziehen der Presshülse von dem Fittinggrundkörper nicht zerstörungsfrei möglich ist.

Der Aufnahmeabschnitt der Presshülse kann entlang seiner in axialer Richtung gemessenen Länge eine im Wesentlichen konstante Öffnungsweite aufweisen. Eine "im Wesentlichen konstante Öffnungsweite" bedeutet hier, dass die Öffnungsweite des Aufnahmeabschnitts im Bereich einer oder mehrerer radial nach innen erstreckter Haltelaschen zumindest abschnittsweise lokal verengt ist. Der Aufnahmeabschnitt kann zum Vormontieren und Führen des mit der Presshülse zu verpressenden Fittinggrundkörpers dienen und den Montage- bzw. Pressvorgang vereinfachen.

Die Innenkontur des Aufnahmeabschnitts kann alternativ dazu auch in einem axialen Längsschnitt zumindest abschnittsweise konisch und/oder bogenförmig verjüngt und/oder geradlinig verjüngt gestaltet sein. Diese Innenkontur kann dabei durch die mindestens eine Haltelasche zumindest abschnittsweise unterbrochen sein. Die mindestens eine Haltelasche kann sich insbesondere ausgehend von der Innenkontur des Aufnahmeabschnitts zumindest abschnittsweise in radial nach innen gewandter Richtung erstrecken.

Die mindestens eine Haltelasche kann insbesondere derart gestaltet sein, dass die Haltelasche im entspannten Zustand zumindest abschnittweise die lichte Weite des Aufnahmeabschnitts definiert. Die mindestens eine Haltelasche kann mit einer inneren Mantelfläche des Aufnahmeabschnitts und/oder einer oder mehreren weiteren Haltelaschen eine Öffnung begrenzen, deren Durchmesser bzw. lichte Weite geringer ist, als der Außendurchmesser des Fittinggrundkörpers. Die Presshülse kann derart gestaltet sein, dass der freie Endabschnitt der Haltelasche beim Aufschieben der Presshülse auf den Fittinggrundkörper durch die äußere Mantelfläche des Fittinggrundkörpers in radialer Richtung nach außen verdrängt und auf diese Weise gegen den Fittinggrundkörper verspannt wird. Das Verspannen der Haltelasche kann selbststätig während des axialen Aufschiebens der Presshülse auf den Fittinggrundkörper erfolgen, ohne dass ein zusätzlicher Arbeitsschritt erforderlich wäre. So kann die Presshülse beispielsweise mit einem aus der WO 2014/000897 A1 bekannten Presswerkzeug gefügt und verspannt werden.

Der Pressabschnitt kann in von der Stirnseite abgewandter Richtung erstreckt an den Aufnahmeabschnitt angeschlossen sein, wobei der Innendurchmesser des Pressabschnitts in von der Stirnseite abgewandter Richtung verjüngt ausgeführt ist. Der Aufnahmeabschnitt und der Pressabschnitt, insbesondere deren Innenkonturen, können dabei insbesondere sprungfrei, d.h. z.B. tangenten- oder krümmungsstetig, unmittelbar ineinander übergehen. Nach dem Vormontieren eines Fittinggrundkörpers kann die Presshülse unmittelbar in axialer Richtung auf den Fittinggrundkörper aufgeschoben werden. So kann auf einfache Weise ein insbesondere möglichst ruckfreies Verpressen erfolgen.

An den Pressabschnitt kann ein in von der Stirnseite abgewandter Richtung erstreckter Endabschnitt angeschlossen sein, wobei die Presshülse im Bereich des Endabschnitts insbesondere eine im Wesentlichen konstante Öffnungsweite hat. Mit Hilfe des Endbereichs kann die zwischen Presshülse und Fittinggrundkörper gebildete Anlage- bzw. Pressfläche vergrößert werden um die axiale Fixierung der Presshülse auf dem Fittinggrundkörper weiter zu verbessern. In alternativen Ausgestaltungen kann der Endabschnitt zur Verstärkung des Pressabschnitts nach außen umgebördelt sein und beispielsweise einen insbesondere im Wesentlichen kreisrund umlaufenden Kragen beschreiben.

Der Aufnahmeabschnitt kann stirnseitig in einen kreisrund umlaufenden Flansch übergehen. So kann die Presshülse im Bereich dieser Stirnseite beispielsweise nach Art eines Trichters gestaltet sein, um das Einführen eines Fittinggrundkörpers zu erleichtern. Die Haltelaschen können ausgehend von dem Flansch in zumindest abschnittsweise radial nach innen gewandter Richtung erstreckt sein.

Nach einer Ausgestaltung der Presshülse können mindestens zwei, insbesondere mindestens drei Haltelaschen vorgesehen sein. Auf diese Weise wird die axiale Sicherung weiter verstärkt.

Die Haltelaschen können in regelmäßigen Winkelabständen zueinander angeordnet sein. Damit kann ein Verkanten der Presshülse beim Aufschieben auf den Fittinggrundkörper durch eine durch die Haltelaschen gebildete im Wesentlichen symmetrische Führung verhindert werden.

Insbesondere sind die Haltelaschen als separate Elemente ausgestaltet. Dadurch können die Haltelaschen aus einem anderen Material gefertigt sein als die restliche Presshülse, insbesondere der Pressabschnitt. Durch eine geeignete Materialwahl kann die Funktion der Haltelaschen weiter optimiert werden, beispielsweise kann ein besonders elastisches Material verwendet werden. Ist eine Presskante an den Haltelaschen vorgesehen, kann auch ein besonders hartes Material verwendet werden. Die Ausgestaltung der Haltelaschen als separate Elemente vereinfacht auch die Herstellung der Presshülse, da die Haltelaschen auch separat produziert und anschließend in die Presshülse eingesetzt werden können. Insbesondere können für eine einfache Herstellung der Presshülse die Haltelaschen in Form eines separaten Schneidrings bereitgestellt werden. Ein solcher Schneidring mit Haltelaschen kann formschlüssig in eine Nut in der Presshülse eingesetzt werden.

Die Erfindung betrifft weiter einen Pressfitting für eine dichtende, unlösbare Rohrverbindung, mit einem Fittinggrundkörper zur Aufnahme wenigstens eines zu verbindenden Rohrs und mit einer erfindungsgemäßen Presshülse. Der Fittinggrundkörper kann ein im Wesentlichen rotationssymmetrisches, insbesondere zylindrisches, Bauteil sein, wie z.B. eine Hülse oder ein Rohrstück. Die mindestens eine Haltelasche verbessert insbesondere den axialen Halt der Presshülse auf einer im Wesentlichen glatten, insbesondere nut- und/oder ausnehmungsfreien, äußeren Mantelfläche des Fittinggrundkörpers. Alternativ oder ergänzend können eine oder mehr umfangsseitig an dem Fittinggrundkörper gebildete Vertiefungen, wie eine Nut, ein Rillenprofil oder dergleichen, vorgesehen sein, in die die Haltelasche einrastet, insbesondere nach Art einer Schnappverbindung.

Pressfitting und Presshülse sind beispielsweise zum Verbinden von Rohren mit kreisrundem Querschnitt vorgesehen.

Die Presshülse und/oder der Fittinggrundkörper können beispielsweise aus einem Stahl-, insbesondere Edelstahl-, oder Kupferwerkstoff, insbesondere Messing, oder Aluminiumwerkstoff gebildet sein. Bevorzugt kann der Werkstoff der Presshülse eine höhere Härte haben, als der Werkstoff des Fittinggrundkörpers. Damit kann ein Eindringen des freien Endabschnitts der Haltelasche in das Material des Fittinggrundkörpers und damit die axiale Fixierung der Presshülse auf dem Fittinggrundkörper begünstigt werden.

Die Erfindung betrifft zudem die Verwendung einer Presshülse oder eines Pressfittings gemäß einem der voranstehenden Ansprüche in einer Heizungs-, Klima-, Sanitär oder Trinkwasserinstallation, oder einer Installation zum Transport technischer oder medizinischer Fluide. So kann beispielsweise durch die Verwendung der Presshülse oder des Pressfittings in einfacher und zuverlässiger Weise eine metallisch dichtende Verbindung zwischen zwei Rohrenden in den voranstehend genannten Anwendungsbereichen hergestellt werden.

Nachfolgend wird die Erfindung anhand von Ausführungsbeispielen näher erläutert. In der Zeichnung zeigen:
Fig. 1 eine erste Presshülse in einer perspektivischen Ansicht,
Fig. 2 zwei Presshülsen gemäß Fig. 1 in einem vormontierten Zustand auf einem Fittinggrundkörper,
Fig. 3 zwei Presshülsen gemäß Fig. 1 in einem fertig montierten Zustand auf einen Fittinggrundkörper mit zwei Rohrenden,
Fig. 4 eine zweite Presshülse in einer perspektivischen Ansicht,
Fig. 5 zwei Presshülsen gemäß Fig. 4 in einem vormontierten Zustand auf einem Fittinggrundkörper,
Fig. 6 zwei Presshülsen gemäß Fig. 4 in einem fertig montierten Zustand auf einem Fittinggrundkörper mit zwei Rohrenden,
Fig. 7 eine dritte Presshülse in einer perspektivischen Ansicht,
Fig. 8 zwei Presshülsen gemäß Fig. 7 in einem vormontierten Zustand auf einem Fittinggrundkörper,
Fig. 9 zwei Presshülsen gemäß Fig. 7 in einem fertig montierten Zustand auf einem Fittinggrundkörper mit zwei Rohrenden,
Fig. 10 eine vierte Presshülse in einer perspektivischen Ansicht,
Fig. 11 zwei Presshülsen gemäß Fig. 10 in einem vormontierten Zustand auf einem Fittinggrundkörper,
Fig. 12 zwei Presshülsen gemäß Fig. 10 in einem fertig montierten Zustand auf einem Fittinggrundkörper mit zwei Rohrenden,
Fig. 13 eine fünfte Presshülse in einer perspektivischen Ansicht,
Fig. 14 zwei Presshülsen gemäß Fig. 13 in einem vormontierten Zustand auf einem Fittinggrundkörper,
Fig. 15 zwei Presshülsen gemäß Fig. 13 in einem fertig montierten Zustand auf einem Fittinggrundkörper mit zwei Rohrenden,
Fig. 16 eine sechste Presshülse in einer perspektivischen Ansicht,
Fig. 17 zwei Presshülsen gemäß Fig. 16 in einem vormontierten Zustand auf einem Fittinggrundkörper,
Fig. 18 zwei Presshülsen gemäß Fig. 16 in einem fertig montierten Zustand auf einem Fittinggrundkörper mit zwei Rohrenden.

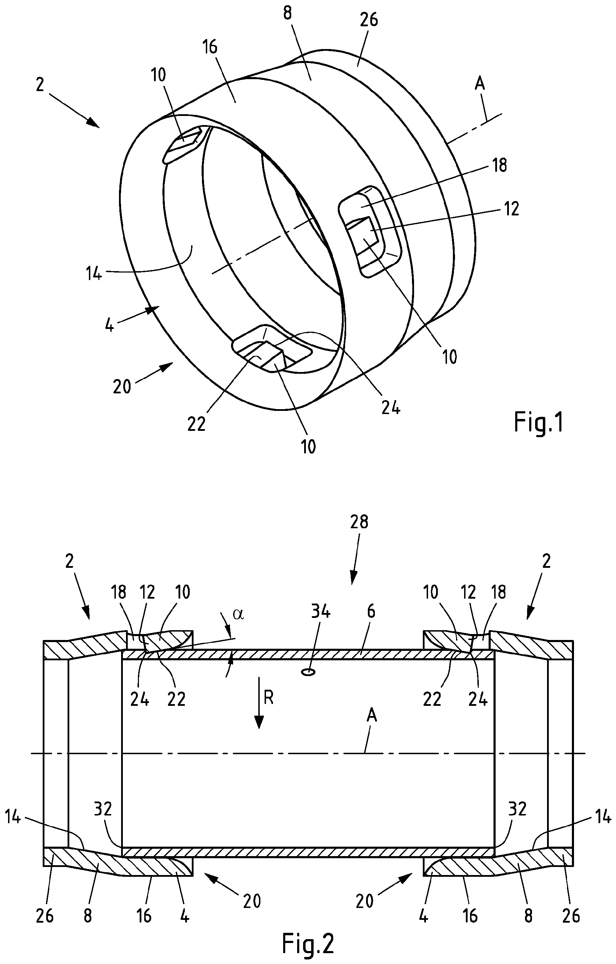

Fig. 1 zeigt eine erste Presshülse 2 in einer perspektivischen Ansicht. Die Presshülse 2 für einen Pressfitting zum Herstellen einer dichtenden unlösbaren Rohrverbindung hat einen Aufnahmeabschnitt 4 zum Aufnehmen eines radial zu verpressenden Fittinggrundkörpers 6 (siehe Fig. 2). Die Presshülse 2 hat einen zum radialen Verengen des Fittinggrundkörpers 6 ausgebildeten Pressabschnitt 8, der entlang einer Achse A betrachtet verjüngt ausgeführt ist. Der Innendurchmesser des Aufnahmeabschnitts 4 ist an den Außendurchmesser des Fittinggrundkörpers 6 angepasst. Der Innendurchmesser des Pressabschnitts 8 ist zumindest abschnittsweise kleiner als der Außendurchmesser des Fittinggrundkörpers 6.

Die Presshülse 2 hat drei in radialer Richtung federnd elastisch gegen den Fittinggrundkörper 6 verspannbare Haltelaschen 10. Die Haltelaschen 10 weisen jeweils einen freien Endabschnitt 12 auf. Im entspannten Zustand (Fig. 1) der Haltelaschen 10 ragt der jeweilige Endabschnitt 12 in radialer Richtung R mindestens teilweise in den Innenbereich des Aufnahmeabschnitts 4 hinein.

Die Presshülse 2 ist durch Tiefziehen aus einem Blech hergestellt. Die Haltelaschen 10 sind durch zwischen einer inneren Mantelfläche 14 und einer äußeren Mantelfläche 16 der Presshülse 2 vorgesehene radiale Öffnungen 18 freigestellt. Die Öffnungen 18 sind durch Stanzen hergestellt. Die Haltelaschen 10 sind nach dem Stanzen in radialer Richtung R nach innen gebogen worden, so dass der jeweilige freie Endabschnitt 12 einer Haltelasche 10 im entspannten Zustand (Fig. 1) mindestens teilweise in den Innenbereich des Aufnahmeabschnitts 4 hineinragt.

Die Presshülse 2 weist eine zum Einführen des Fittinggrundkörpers 6 vorgesehene Stirnseite 20 auf. Die Haltelaschen 10 sind in von der Stirnseite 20 abgewandter Richtung geneigt. Eine der Stirnseite 20 zugewandte Führungsfläche 22 der jeweiligen Haltelasche 10 ist zu der Achse A unter einem spitzen Winkel α geneigt (siehe Fig. 2). Die Haltelasche 10 weist im Bereich ihres freien Endabschnitts 12 eine rechtwinklige, also scharfkantige Presskante 24 auf, die zur Anlage an dem Fittinggrundkörper 6 vorgesehen ist.

Der Aufnahmeabschnitt 4 der Presshülse 2 ist der zum Einführen des Fittinggrundkörpers 6 vorgesehenen Stirnseite 20 zugeordnet. Der Aufnahmeabschnitt 4 weist entlang seiner in axialer Richtung gemessenen Länge eine im Wesentlichen konstante Öffnungsweite auf. An den Aufnahmeabschnitt 4 ist der sich in von der Stirnseite 20 abgewandter Richtung erstreckende Pressabschnitt 8 angeschlossen. Der Pressabschnitt 8 ist in von der Stirnseite 20 abgewandter Richtung verjüngt ausgeführt. An den Pressabschnitt 8 ist ein in von der Stirnseite 20 abgewandter Richtung erstreckter Endabschnitt 26 angeschlossen, in dem die Presshülse 2 eine im Wesentlichen konstante Öffnungsweite hat. Die Haltelaschen 10 sind in dem Aufnahmeabschnitt 4 vorgesehen. Die Haltelaschen 10 sind in regelmäßigen Winkelabständen zueinander angeordnet.

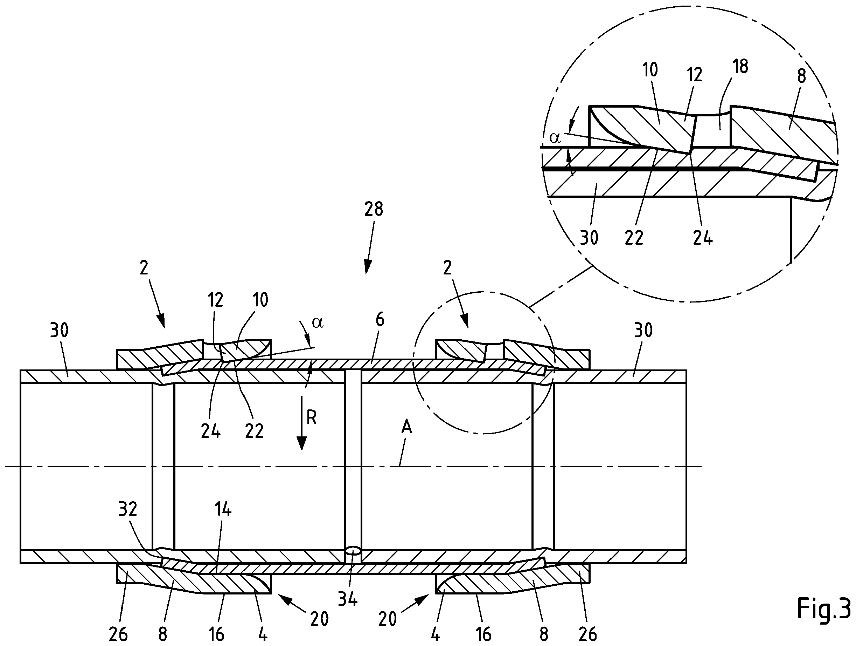

Fig. 2 zeigt zwei Presshülsen 2 gemäß Fig. 1 und den Fittinggrundkörper 6, der mit Hilfe der Presshülsen 2 zu verpressen ist, in einem vormontierten Zustand. Die Presshülsen 2 und der Fittinggrundkörper 6 bilden einen Pressfitting 28 zum Verbinden zweier Rohrenden 30 (siehe Fig. 3). Die Rohrenden 30 sind jeweils in den Fittinggrundkörper 6 einführbar. Durch ein Umbördeln des Rands 32 des Fittinggrundkörpers 6 werden die Rohrenden 30 mit dem Fittinggrundkörper 6 verpresst. Dazu werden die Presshülsen 2 ausgehend von der in Fig. 2 dargestellten Vormontageposition in axialer Richtung entlang der Achse A auf den Fittinggrundkörper 6 aufgeschoben.

Fig. 3 zeigt den Pressfitting 28 mit den Rohrenden 30 im fertig montierten, verpressten Zustand. Die Rohrenden 30 sind jeweils bis zu einem im Bereich der inneren Mantelfläche des Fittinggrundkörpers 6 vorgesehenen Anschlag 34 in den Fittinggrundkörper 6 eingeschoben. Aus der vergrößerten Darstellung ist erkennbar, wie Presshülse 2, Fittinggrundkörper 6 und Rohrende 30 jeweils zusammenwirken.

Beim Verpressen des Pressfittings 28 mit einem jeweiligen Rohrende 30 wird die Presshülse 2 in axialer Richtung auf den Fittinggrundkörper 6 aufgeschoben. Dazu wird ein hier nicht dargestelltes, beispielsweise aus WO 2014/000897 A1 bekanntes Presswerkzeug verwendet. Der Randbereich bzw. der Rand 32 des Fittinggrundkörpers 4 gleitet während des axialen Verschiebens entlang des sich im Durchmesser verengenden Pressabschnitts 8 der Presshülse 2 ab. Dabei wird der Randbereich bzw. der Rand 32 des Fittinggrundkörpers 6 in radial nach innen gewandter Richtung umgebördelt. Mit anderen Worten bildet die Presshülse 2 eine Matrize, wobei sich der Randbereich bzw. der Rand 32 des Fittinggrundkörpers 6 während des Pressvorgangs an den konisch zulaufenden Pressabschnitt 8 der Presshülse 2 anschmiegt, so dass der Randbereich bzw. der Rand 32 des Fittinggrundkörpers 6 entlang der Innenkontur des Pressabschnitts 8 abgleitet und dadurch plastisch verformt wird. Die Form der Presshülse 2 bleibt im Wesentlichen unverändert.

Die Haltelaschen 10 greifen mit ihren Presskanten 24 in das Material des Fittinggrundkörpers 6 ein und verhindern ein axiales Abrutschen der jeweiligen Presshülse 2 von dem Fittinggrundkörper 6. Das Material der Presshülse 2 ist härter als das Material des Fittinggrundkörpers 6. Die jeweilige Presshülse 2 ist nach dem axialen Aufschieben auf den Fittinggrundkörper 6 nicht mehr zerstörungsfrei von dem Fittinggrundkörper 6 abziehbar, da sich die Haltelaschen 10 mit den freien Endabschnitten 12 in dem Fittinggrundkörper 6 festkrallen.

Nachstehend werden weitere Ausführungsbeispiele von Presshülsen beschrieben, wobei im Vergleich zum zuvor beschriebenen Ausführungsbeispiel im Wesentlichen gleichwirkenden Komponenten bzw. strukturellen Merkmalen gleiche Bezugszeichen zugordnet werden.

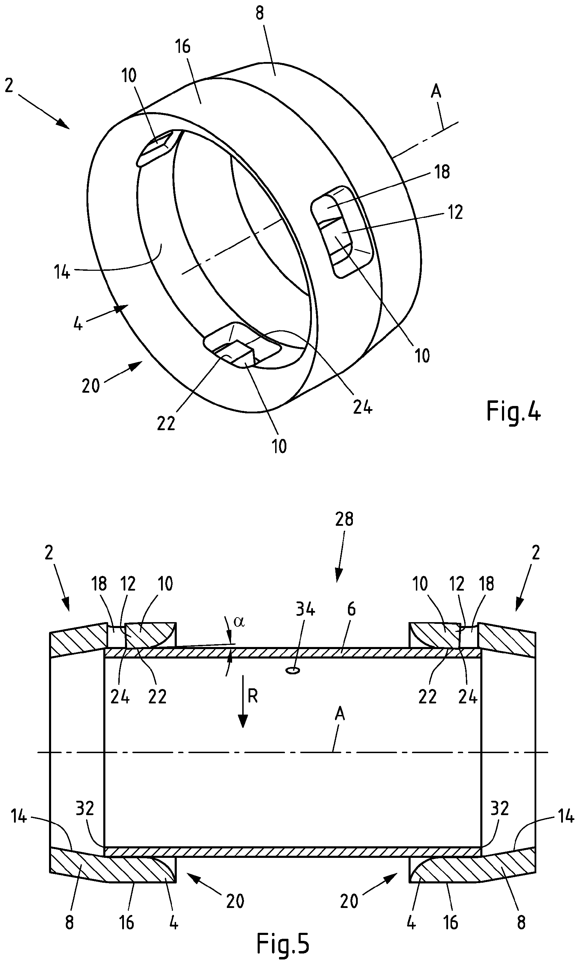

Fig. 4 zeigt ein zweites Ausführungsbeispiel einer Presshülse 2 in einer perspektivischen Ansicht. Die in Fig. 3 dargestellte Presshülse 2 unterscheidet sich lediglich dadurch von dem in Fig. 1 beschriebenen Ausführungsbeispiel, dass auf den Endabschnitt verzichtet worden ist.

Fig. 5 zeigt zwei Presshülsen 2 gemäß Fig. 4 und einen Fittinggrundkörper 6 in einem vormontierten Zustand. Wie auch bei dem ersten Ausführungsbeispiel sichern die Haltelaschen 10 die Presshülsen 2 bereits im vormontierten Zustand von einem axialen Abziehen oder Abrutschen der Presshülsen 2 von dem Fittinggrundkörper 6 entgegen der Montage- bzw. Fügerichtung.

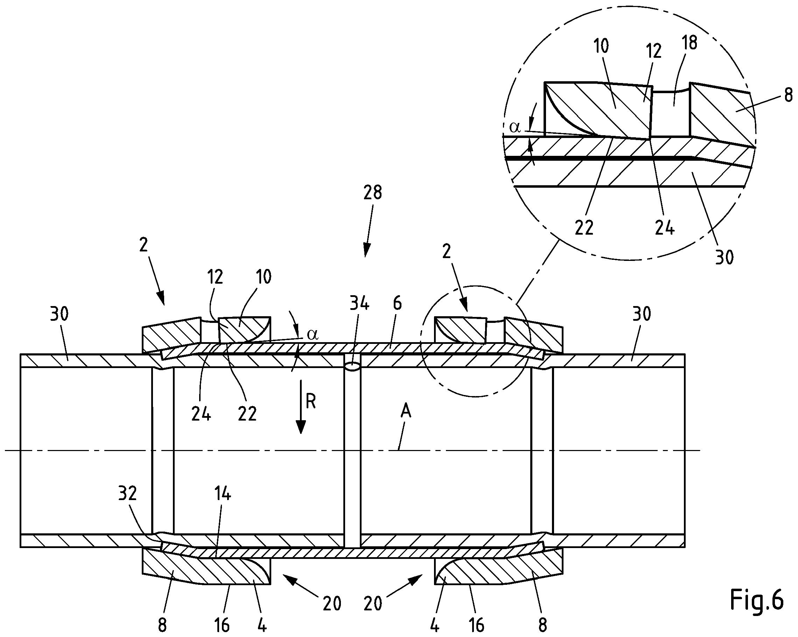

Fig. 6 zeigt zwei Presshülsen 2 gemäß Fig. 4 in einem fertig montierten Zustand auf dem Fittinggrundkörper 6 mit zwei Rohrenden 30. Aus der Einzelheit ist wiederum das Zusammenwirken von Presshülse 2, Fittinggrundkörper 6 und Rohrende 30 zu entnehmen.

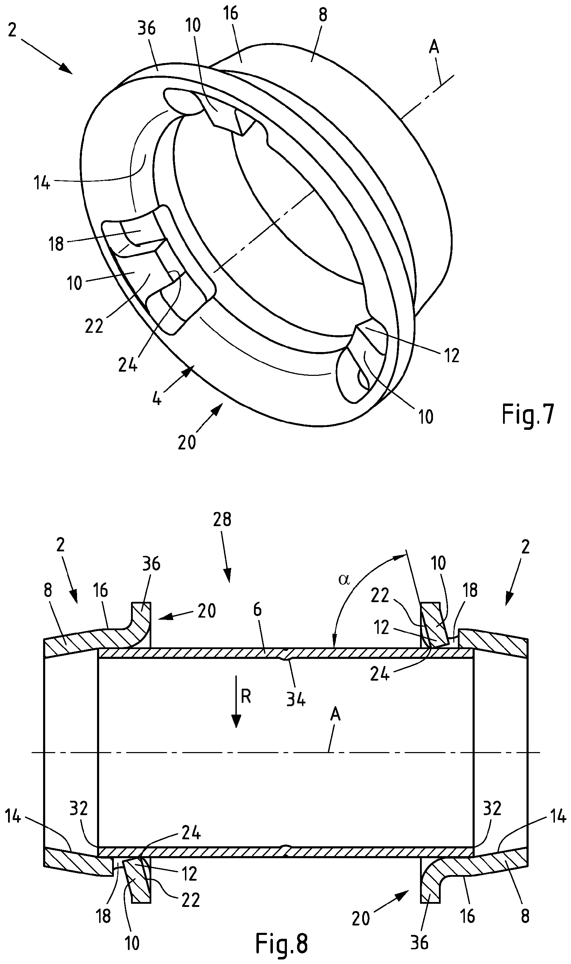

Fig. 7 zeigt ein drittes Ausführungsbeispiel einer Presshülse 2 in einer perspektivischen Ansicht, die sich dadurch von dem in Fig. 1 beschriebenen Ausführungsbeispiel unterscheidet, dass auf einen Endabschnitt verzichtet worden ist und dass der Aufnahmeabschnitt 4 stirnseitig in einen kreisrund umlaufenden Flansch 36 übergeht. Die Haltelaschen 10 sind im Bereich des Flanschs 36 angeordnet. Die Haltelaschen 10 sind gegenüber den zuvor beschriebenen Ausführungsbeispielen unter einem wesentlich steileren Winkel α gegenüber der Achse A angestellt. Auf diese Weise kann wird eine in axialer Richtung besonders schmale Bauform der Presshülse erreicht.

Fig. 8 zeigt zwei Presshülsen 2 gemäß Fig. 7 und einen Fittinggrundkörper 6 in einem vormontierten Zustand. Wie auch bei den zuvor beschriebenen Ausführungsbeispielen sichern die Haltelaschen 10 die Presshülsen 2 bereits im vormontierten Zustand von einem axialen Abziehen oder Abrutschen der Presshülsen 2 von dem Fittinggrundkörper 6 entgegen der Montage- bzw. Fügerichtung.

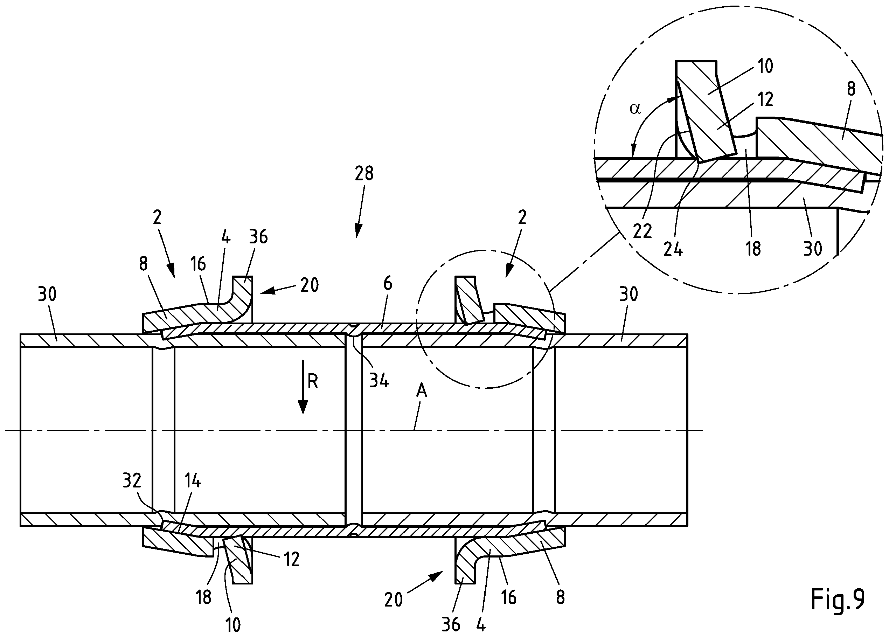

Fig. 9 zeigt zwei Presshülsen 2 gemäß Fig. 7 in einem fertig montierten Zustand auf dem Fittinggrundkörper 6 mit zwei Rohrenden 30. Aus der Einzelheit ist das Zusammenwirken von Presshülse 2, Fittinggrundkörper 6 und Rohrende 30 zu entnehmen.

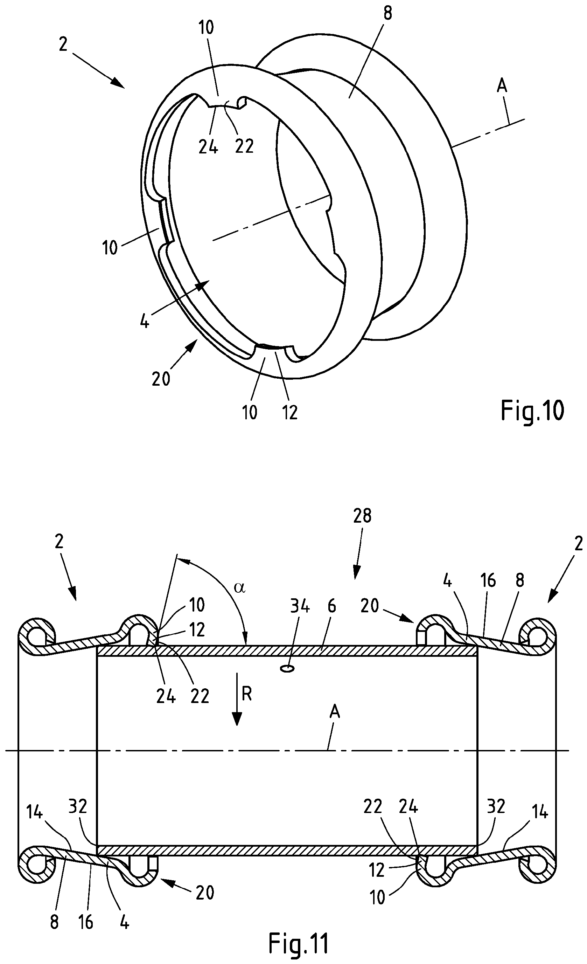

Fig. 10 zeigt ein viertes Ausführungsbeispiel einer Presshülse 2 in einer perspektivischen Ansicht. Die in Fig. 10 gezeigte Presshülse 2 zeichnet sich dadurch aus, dass die Haltelaschen 10 unmittelbar stirnseitig an dem Aufnahmeabschnitt 4 vorgesehen sind. Sowohl der Rand des Aufnahmeabschnitts als auch der Rand des Pressabschnitts sind kreis- bzw. bogenförmig umgebördelt. Auf diese Weise ist die Presshülse 2 entgegen einem radialen Aufweiten während des Pressvorgangs verstärkt bzw. ausgesteift.

Fig. 11 zeigt zwei Presshülsen 2 gemäß Fig. 10 und einen Fittinggrundkörper 6 in einem vormontierten Zustand. Wie auch bei den zuvor beschriebenen Ausführungsbeispielen sichern die Haltelaschen 10 die Presshülsen 2 bereits im vormontierten Zustand von einem axialen Abziehen oder Abrutschen der Presshülsen 2 von dem Fittinggrundkörper 6 entgegen der Montage- bzw. Fügerichtung.

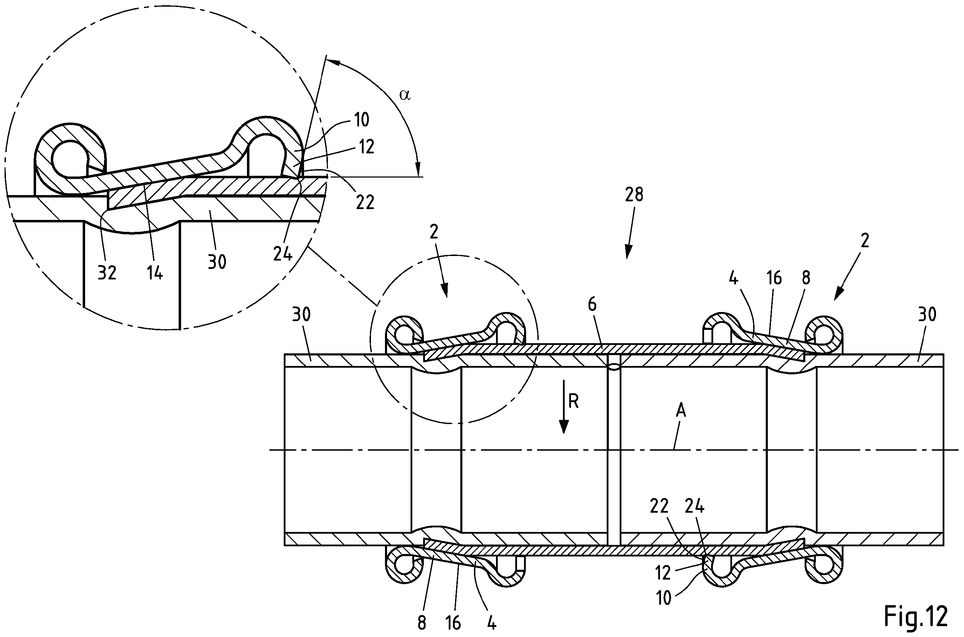

Fig. 12 zeigt zwei Presshülsen 2 gemäß Fig. 10 in einem fertig montierten Zustand auf dem Fittinggrundkörper 6 mit zwei Rohrenden 30. Aus der Einzelheit ist das Zusammenwirken von Presshülse 2, Fittinggrundkörper 6 und Rohrende 30 zu entnehmen.

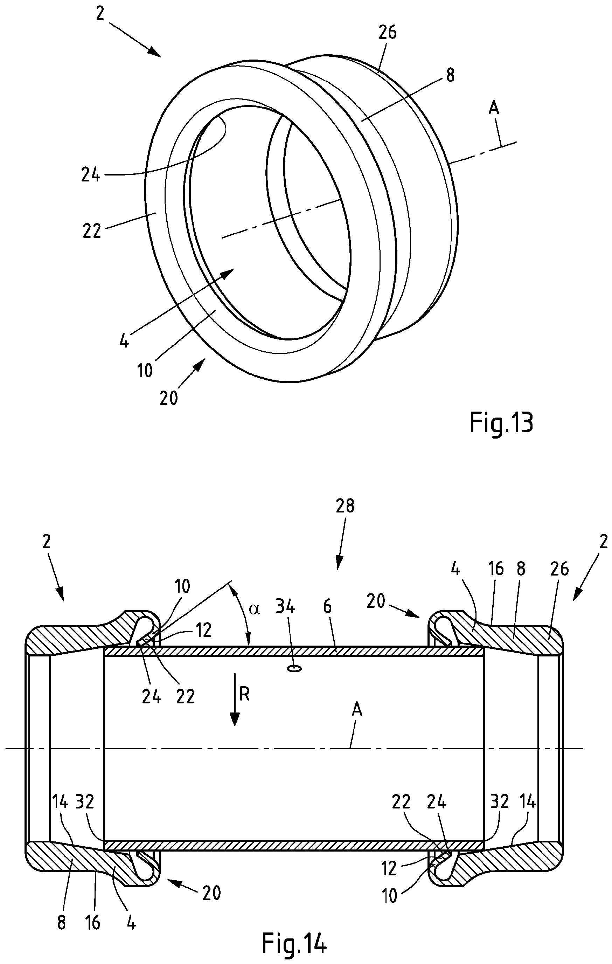

Fig. 13 zeigt ein fünftes Ausführungsbeispiel einer Presshülse 2 in einer perspektivischen Ansicht. Hierbei ist die Haltelasche 10 unmittelbar stirnseitig an dem Aufnahmeabschnitt 4 vorgesehen, wobei sich die Haltelasche 10 über den gesamten Umfang der Presshülse 2 erstreckt. Hierfür ist der Rand des Aufnahmeabschnitts 4 bogenförmig um mehr als 90° nach innen umgebördelt. Die Presshülse 2 ist weiter entgegen dem in den Fig. 10 bis 12 gezeigten Ausführungsbeispiel aus einem Bauteil mit verschiedenen Wanddicken ausgestaltet, um insbesondere den Pressbereich 8 zu verstärken.

Fig. 14 zeigt zwei Presshülsen 2 gemäß Fig. 13 und einen Fittinggrundkörper 6 in einem vormontierten Zustand. Die Haltelasche 10 sichert die Presshülsen 2 im vormontierten Zustand von einem axialen Abziehen oder Abrutschen der Presshülsen 2 von dem Fittinggrundkörper 6 entgegen der Montage- bzw. Fügerichtung.

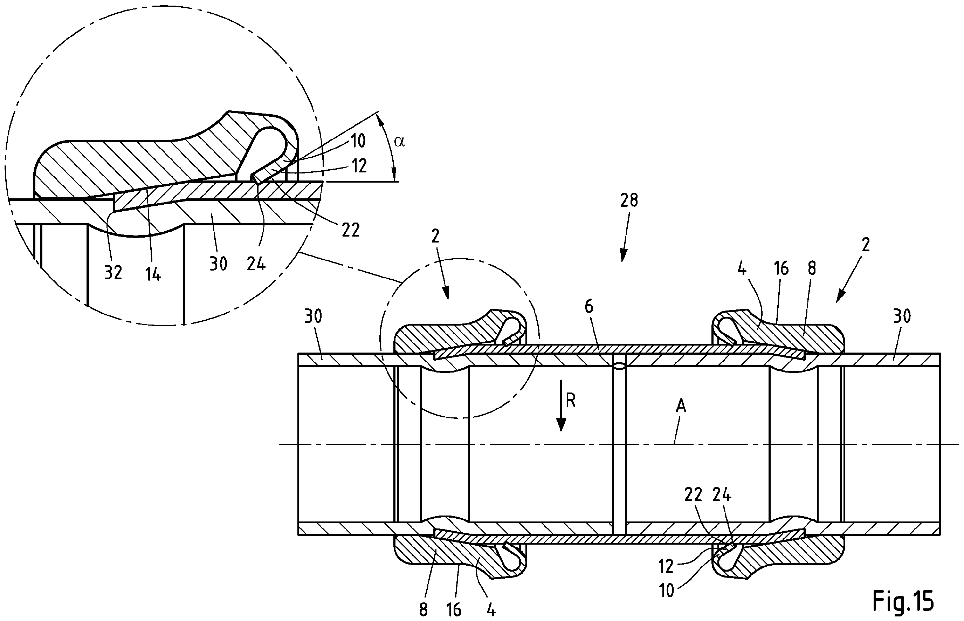

Fig. 15 zeigt zwei Presshülsen 2 gemäß Fig. 13 in einem fertig montierten Zustand auf dem Fittinggrundkörper 6 mit zwei Rohrenden 30. Aus der Einzelheit ist das Zusammenwirken von Presshülse 2, Fittinggrundkörper 6 und Rohrende 30 zu entnehmen.

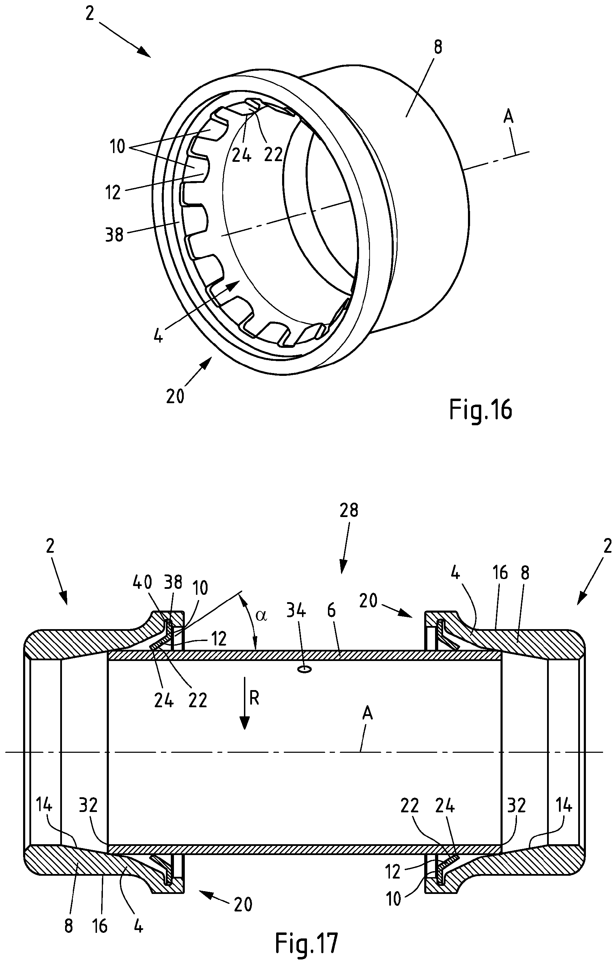

Fig. 16 zeigt ein sechstes Ausführungsbeispiel einer Presshülse 2 in einer perspektivischen Ansicht. Die Haltelaschen 10 sind hierbei als Elemente eines vom Grundkörper der Presshülse 2 separaten Schneidringes 38 ausgeführt. Eine Vielzahl von Haltelaschen 10 wird über den Schneidring 38 entlang des Umfangs der Presshülse bereitgestellt. Der Schneidring 38 und die Haltelaschen 10 können aus einem von der restlichen Presshülse verschiedenen Material gefertigt sein.

Fig. 17 zeigt zwei Presshülsen 2 gemäß Fig. 16 und einen Fittinggrundkörper 6 in einem vormontierten Zustand. Der Schneidring 38 mit den daran angeordneten Haltelaschen wird in einer Nut 40 im Aufnahmeabschnitt 4 gehalten. Die Haltelasche 10 sichert die Presshülsen 2 im vormontierten Zustand auf dem Fittinggrundkörper 6.

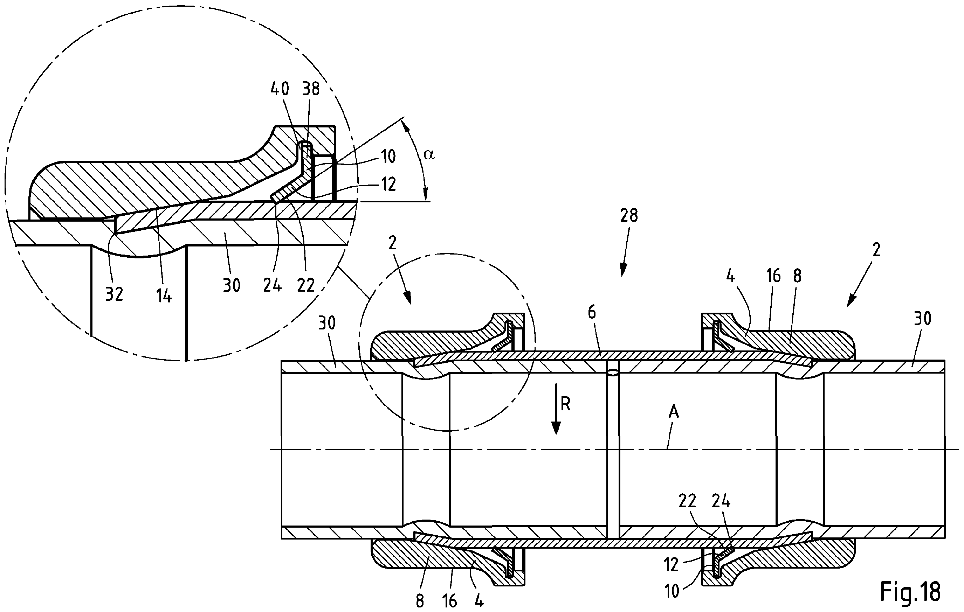

Fig. 18 zeigt zwei Presshülsen 2 gemäß Fig. 16 in einem fertig montierten Zustand auf dem Fittinggrundkörper 6 mit zwei Rohrenden 30. Aus der Einzelheit ist das Zusammenwirken von Presshülse 2, Fittinggrundkörper 6 und Rohrende 30 zu entnehmen.

## Patentansprüche

1. Presshülse für einen Pressfitting zum Herstellen einer dichtenden unlösbaren Rohrverbindung,
- mit einem Aufnahmeabschnitt (4) zum Aufnehmen eines durch die Presshülse zu verpressenden Fittinggrundkörpers (6) und mit einem Pressabschnitt (8),
- wobei der Innendurchmesser des Aufnahmeabschnitts (4) an den Außendurchmesser des Fittinggrundkörpers (6) angepasst ist und
- wobei der Innendurchmesser des Pressabschnitts (8) zumindest abschnittsweise kleiner als der Außendurchmesser des Fittinggrundkörpers (6) ausgebildet ist,
**dadurch gekennzeichnet,**
- **dass** im Aufnahmeabschnitt (4) mindestens eine in radialer Richtung (R) federnd elastisch nach innen verspannbare Haltelasche (10) vorgesehen ist und
- **dass** die Haltelasche (10) einen freien Endabschnitt (12) aufweist, der im entspannten Zustand der Haltelasche (10) in radialer Richtung (R) mindestens teilweise in den Innenbereich des Aufnahmeabschnitts (4) hineinragt.

2. Presshülse nach Anspruch 1,
**dadurch gekennzeichnet,**
**dass** die Presshülse (2) durch Umformen, insbesondere Tiefziehen, hergestellt ist.

3. Presshülse nach einem der Anspruch 1 oder 2,
**dadurch gekennzeichnet,**
**dass** die Haltelasche (10) durch eine zwischen einer inneren Mantelfläche (14) und einer äußeren Mantelfläche (16) der Presshülse vorgesehene radiale Öffnung (18) freigestellt ist.

4. Presshülse nach einem der Ansprüche 1 bis 3,
**dadurch gekennzeichnet,**
**dass** die Presshülse (2) im Bereich des Aufnahmeabschnitts (4) eine zum Einführen des Fittinggrundkörpers (6) vorgesehene Stirnseite (20) aufweist und dass die Haltelasche (10) in von der Stirnseite (20) abgewandter Richtung geneigt ist.

5. Presshülse nach Anspruch 4,
**dadurch gekennzeichnet,**
**dass** eine der Stirnseite (20) zugewandte Führungsfläche (22) der Haltelasche (10) zu einer zentralen Achse (A) der Presshülse (2) unter einem Winkel (α) geneigt angeordnet ist, wobei der Winkel (α) größer als 0° und kleiner als 90° ist.

6. Presshülse nach einem der Ansprüche 1 bis 5,
**dadurch gekennzeichnet,**
**dass** im Bereich des freien Endabschnitts (12) der mindestens einen Haltelasche (10) eine zur Anlage an dem Fittinggrundkörper (6) vorgesehene Presskante (24) ausgebildet ist, wobei die Presskante (24) insbesondere scharfkantig ist.

7. Presshülse nach einem der Ansprüche 1 bis 6,
**dadurch gekennzeichnet,**
**dass** der Aufnahmeabschnitt (4) entlang seiner in axialer Richtung gemessenen Länge eine im Wesentlichen konstante Öffnungsweite aufweist.

8. Presshülse nach Anspruch 4,
**dadurch gekennzeichnet,**
**dass** der Pressabschnitt (8) in von der Stirnseite (20) abgewandter Richtung erstreckt an den Aufnahmeabschnitt (4) angeschlossen ist, wobei der Innendurchmesser des Pressabschnitts in von der Stirnseite (20) abgewandter Richtung verjüngt ausgeführt ist.

9. Presshülse nach Anspruch 8,
**dadurch gekennzeichnet,**
**dass** an den Pressabschnitt (8) ein in von der Stirnseite (20) abgewandter Richtung erstreckter Endabschnitt (26) angeschlossen ist, wobei die Presshülse (2) im Bereich des Endabschnitts (26) insbesondere eine im Wesentlichen konstante Öffnungsweite hat.

10. Presshülse nach einem der Ansprüche 1 bis 9,
**dadurch gekennzeichnet,**
**dass** der Aufnahmebereich (4) stirnseitig in einen kreisrund umlaufenden Flansch (36) übergeht.

11. Presshülse nach einem der Ansprüche 1 bis 10,
**dadurch gekennzeichnet,**
**dass** zwei oder mehr, insbesondere drei oder mehr, Haltelaschen (10) vorgesehen sind.

12. Presshülse nach Anspruch 11,
**dadurch gekennzeichnet,**
**dass** die Haltelaschen (10) insbesondere in regelmäßigen Winkelabständen zueinander angeordnet sind.

13. Presshülse nach Anspruch 11,
**dadurch gekennzeichnet,**
**dass** die Haltelaschen (10) als separate Elemente, insbesondere in Form eines Schneidrings (38), ausgestaltet sind.

14. Pressfitting für eine dichtende, unlösbare Rohrverbindung,
- mit einem Fittinggrundkörper (6) zur Aufnahme wenigstens eines zu verbindenden Rohrs (30) und
- mit einer Presshülse (2) nach einem der voranstehenden Ansprüche.

15. Verwendung einer Presshülse oder eines Pressfittings gemäß einem der voranstehenden Ansprüche in einer Heizungs-, Klima-, Sanitär oder Trinkwasserinstallation, oder einer Installation zum Transport technischer oder medizinischer Fluide.

## Claims

1. Pressing sleeve for a press fitting for producing a sealing, non-releasable pipe connection,
- having a receiving section (4) for receiving a main fitting body (6) and having a pressing section (8),
- wherein the inner diameter of the receiving section (4) is adapted to the outer diameter of the main fitting body (6), and
- wherein the inner diameter of the pressing section (8) is at least in sections designed to be smaller than the outer diameter of the main fitting body (6),
**characterised in that**
- at least one retaining lug (10) which can be clamped resiliently elastically inwards in the radial direction (R) is provided in the receiving section (4), and **in that**
- the retaining lug (10) has a free end section (12) which, with the retaining lug (10) in the undamped state, protrudes in the radial direction (R) at least partially into the interior of the receiving section (4).

2. Pressing sleeve according to Claim 1,
**characterised in that** the pressing sleeve (2) is produced by forming, in particular by deep drawing.

3. Pressing sleeve according to either one of Claims 1 and 2,
**characterised in that** the retaining lug (10) is released through a radial opening provided between an inner lateral surface (14) and an outer lateral surface (16) of the pressing sleeve.

4. Pressing sleeve according to any one of Claims 1 to 3,
**characterised in that** the pressing sleeve (2) in the area of the receiving section (4) has a face side (20) provided for inserting the main fitting body (6), and **in that** the retaining lug (10) is inclined in the direction facing away from the face side (20).

5. Pressing sleeve according to Claim 4,
**characterised in that** a guide surface (22) of the retaining lug (10) facing the face side (20) is arranged inclined at an angle (α) in relation to a central axis (A) of the pressing sleeve (2), wherein the angle (α) is greater than 0° and less than 90°.

6. Pressing sleeve according to any one of Claims 1 to 5,
**characterised in that** a pressing edge (24) provided for abutting on the main fitting body (6) is formed in the area of the free end section (12) of the at least one retaining lug (10), wherein the pressing edge (24) is in particular sharp-edged.

7. Pressing sleeve according to any one of Claims 1 to 6,
**characterised in that** the receiving section (4) has an essentially constant opening width along its length measured in the axial direction.

8. Pressing sleeve according to Claim 4,
**characterised in that** the pressing section (8) extended in the direction facing away from the face side (20) is attached to the receiving section (4), wherein the inner diameter of the pressing section is tapered in the direction facing away from the face side (20).

9. Pressing sleeve according to Claim 8,
**characterised in that** an end section (26) extended in the direction facing away from the face side (20) is attached to the pressing section (8), wherein the pressing sleeve (2) has in particular an essentially constant opening width in the area of the end section (26).

10. Pressing sleeve according to any one of Claims 1 to 9,
**characterised in that** the receiving section (4) on the face side merges into a circularly circumferential flange (36).

11. Pressing sleeve according to any one of Claims 1 to 10,
**characterised in that** two or more, in particular three or more, retaining lugs (10) are provided.

12. Pressing sleeve according to Claim 11,
**characterised in that** the retaining lugs (10) are in particular arranged at regular angular distances in relation to one another.

13. Pressing sleeve according to Claim 11,
**characterised in that** the retaining lugs (10) are formed as separate elements, in particular in the form of a cutting ring (38).

14. Press fitting for a sealing, non-releasable pipe connection,
- having a main fitting body (6) for accommodating at least one pipe (30) to be connected and
- having a pressing sleeve (2) according to any one of the preceding claims.

15. Use of a pressing sleeve or of a press fitting according to any one of the preceding claims in a heating installation, air-conditioning installation, sanitary installation or drinking water installation or in an installation for conveying technical or medical fluids.

## Revendications

1. Manchon à compression pour un raccord à compression permettant la réalisation d'un assemblage de tuyaux, non détachable et assurant l'étanchéité, ledit manchon à compression
- comprenant une partie de logement (4) servant au logement d'un corps de base de raccord (6) devant être comprimé par le manchon à compression et
- comprenant une partie de compression (8),
- où le diamètre intérieur de la partie de logement (4) est adapté au diamètre extérieur du corps de base (6) du raccord et
- où le diamètre intérieur de la partie de compression (8) est configuré en étant au moins partiellement plus petit que le diamètre extérieur du corps de base (6) du raccord,
**caractérisé**
- **en ce qu'**il est prévu, dans la partie de logement (4), au moins une patte de retenue (10) pouvant être serrée vers l'intérieur de façon élastique comme un ressort, dans le sens radial (R), et
- **en ce que** la patte de retenue (10) présente une partie d'extrémité libre (12) qui, quand la patte de retenue (10) est détendue, pénètre au moins partiellement dans la zone intérieure de la partie de logement (4), dans le sens radial (R).

2. Manchon à compression selon la revendication 1,
**caractérisé**
**en ce que** le manchon à compression (2) est fabriqué par formage, en particulier par emboutissage profond.

3. Manchon à compression selon l'une des revendications 1 ou 2,
**caractérisé**
**en ce que** la patte de retenue (10) est dégagée à travers une ouverture radiale (18) prévue entre une surface latérale intérieure (14) et une surface latérale extérieure (16) du manchon à compression.

4. Manchon à compression selon l'une quelconque des revendications 1 à 3,
**caractérisé**
**en ce que** le manchon à compression (2) présente, dans la zone de la partie de logement (4), une face frontale (20) prévue pour l'introduction du corps de base (6) du raccord, et **en ce que** la patte de retenue (10) est inclinée dans une direction opposée à la face frontale (20).

5. Manchon à compression selon la revendication 4,
**caractérisé**
**en ce qu'**une surface de guidage (22) de la patte de retenue (10), qui est tournée vers la face frontale (20), est disposée de façon inclinée suivant un angle (α) par rapport à un axe central (A) du manchon à compression (2), où l'angle (α) est plus grand que 0° et plus petit que 90°.

6. Manchon à compression selon l'une quelconque des revendications 1 à 5,
**caractérisé**
**en ce qu'**une arête de compression (24), prévue pour venir en appui sur le corps de base (6) du raccord, est configurée dans la zone de la partie d'extrémité libre (12) de la patte de retenue (10) au moins au nombre de un, où l'arête de compression (24) est en particulier à bord vif.

7. Manchon à compression selon l'une quelconque des revendications 1 à 6,
**caractérisé**
**en ce que** la partie de logement (4) présente, le long de sa longueur mesurée suivant la direction axiale, une largeur d'ouverture pratiquement constante.

8. Manchon à compression selon la revendication 4,
**caractérisé**
**en ce que** la partie de compression (8) est raccordée à la partie de logement (4) étendue dans la direction opposée à la face frontale (20), où le diamètre intérieur de la partie de compression est réalisé en allant en diminuant dans la direction opposée à la face frontale (20).

9. Manchon à compression selon la revendication 8,
**caractérisé**
**en ce qu'**une partie d'extrémité (26) étendue dans la direction opposée à la face frontale (20) est raccordée à la partie de compression (8), où le manchon à compression (2), dans la zone de la partie d'extrémité (26), a en particulier une largeur d'ouverture pratiquement constante.

10. Manchon à compression selon l'une quelconque des revendications 1 à 9,
**caractérisé**
**en ce que** la zone de logement (4) se transforme, frontalement, en une bride (36) s'étendant circonférentiellement de façon circulaire.

11. Manchon à compression selon l'une quelconque des revendications 1 à 10,
**caractérisé**
**en ce qu'**il est prévu deux pattes de retenue (10) ou plus, en particulier trois ou plus.

12. Manchon à compression selon la revendication 11,
**caractérisé**
**en ce que** les pattes de retenue (10) sont disposées en particulier suivant des distances angulaires régulières les unes par rapport aux autres.

13. Manchon à compression selon la revendication 11,
**caractérisé**
**en ce que** les pattes de retenue (10) sont configurées comme des éléments séparés, se présentant en particulier sous la forme d'une bague coupante (38).

14. Raccord à compression pour un assemblage de tuyaux, non détachable et assurant l'étanchéité, ledit raccord à compression
- comprenant un corps de base de raccord (6) servant au logement d'au moins un tuyau (30) à assembler et
- comprenant un manchon à compression (2) selon l'une quelconque des revendications précédentes.

15. Utilisation d'un manchon à compression ou d'un raccord à compression selon l'une quelconque des revendications précédentes, dans une installation de chauffage, de climatisation, sanitaire ou d'alimentation en eau potable, ou bien dans une installation pour le transport de fluides techniques ou médicaux.
